# EUROPÄISCHE PATENTANMELDUNG

(11) **EP 2 781 471 A1**
(43) Veröffentlichungstag der Anmeldung: **24.09.2014**
(21) Anmeldenummer: 14159980.3
(22) Anmeldetag: 14.03.2014
(51) Int. Cl.: B65G 1/04

(54) **Regalbediengerät**

(30) Priorität: 21.03.2013 DE 102013205012
(71) Anmelder: Siemens Aktiengesellschaft, 80333 München (DE)
(72) Erfinder: Klein, Matthias, 63456 Hanau (DE)

(57) **Zusammenfassung**

Die Erfindung betrifft ein Regalbediengerät für ein Hochregallager mit mindestens zwei benachbarten Hochregalen (R1, R2). Die benachbarten Hochregale (R1, R2) sind parallel zueinander angeordnet, bilden eine zwischen diesen verlaufende Bediengasse (G) und weisen Regalfächer (F) für einzulagernde Ladeeinheiten (E) auf. Das Regalbediengerät umfasst ein in Gassenlängsrichtung (RL) spurgeführt verfahrbares Fahrwerk (1) mit einem Mast, einen in vertikale Richtung entlang des Masts verfahrbaren Hubschlitten und vom Hubschlitten getragene Lastaufnahmemittel (2) zur Aufnahme und Abgabe einer Ladeeinheit (E). Die Ladeeinheit (E) weist eine Längsseite (L) und eine kürzer als diese bemessene Breitseite (B) auf. Dabei sind die Lastaufnahmemittel (2) zwischen einer Bedienposition (PB) eines zu bedienenden Regalfaches (F), in der die Ladeeinheit (E) in der Bediengasse (G) vor dem Regalfach (F) angeordnet und mit ihrer Längsseite (L) in Gassenquerrichtung (RGQ) ausgerichtet ist, und einer Fachposition (PF) im Regalfach (F), in der die Ladeeinheit (E) durch die Lastaufnahmemittel (2) aus dem Regalfach (F) aufnehmbar beziehungsweise an dieses abgebbar ist, in Gassenquerrichtung (RQ) verfahrbar. Erfindungsgemäß ist beim Verfahren der Lastaufnahmemittel (2) längs der Bediengasse (G) bis hin zu einer Umsetzposition (PU) des zu bedienenden Regalfaches (F) oder weg von dieser die Längsseite (L) der von den Lastaufnahmemitteln (2) aufgenommenen Ladeeinheit (E) in Gassenlängsrichtung (RGL) ausgerichtet, wobei durch die Lastaufnahmemittel (2) beim Verfahren zwischen Umsetzposition (PU) und Bedienposition (PB) des zu bedienenden Regalfaches (F) eine überlagerte Dreh- und Verschiebebewegung ausführbar ist. Hierdurch kann die Lagerkapazität eines Hochregallagers, insbesondere zum Ein- und Auslagern von auf rechteckigen Paletten angeordnetem Ladegut gesteigert werden.

## Beschreibung

Die Erfindung bezieht sich auf ein Regalbediengerät für ein Hochregallager nach dem Oberbegriff des Patentanspruches 1.

Hochregallager weisen meist mehrere Hochregale mit Regalfächern zum Ein- und Auslagern von Ladeeinheiten, insbesondere von auf Paletten lagernden Gütern, auf. Zwischen je zwei parallel ausgerichteten, benachbarten Hochregalen befindet sich eine Bediengasse, in welcher jeweils ein Regalbediengerät operiert. Jedes der Regalbediengeräte weist ein Fahrwerk auf, welches in Gassenlängsrichtung spurgeführt verfahrbar ist. Auf dem Fahrwerk stützt sich ein Mast oder Rahmen ab, längs dessen ein Hubschlitten vertikal verfahrbar ist. Auf dem Hubschlitten sind Lastaufnahmemittel zur Aufnahme und Abgabe einer Ladeeinheit angeordnet, die in Gassenquerrichtung verfahrbar sind. Eine Ladeeinheit, beispielsweise eine rechteckige Palette, weist eine Längsseite und eine kürzer als diese bemessene Breitseite auf. Die Lastaufnahmemittel sind zwischen einer Bedienposition eines zu bedienenden Regalfaches und einer Fachposition im Regalfach horizontal verfahrbar. In der Bedienposition ist die Ladeeinheit in der Bediengasse vor dem Regalfach angeordnet und mit ihrer Längsseite in Gassenquerrichtung ausgerichtet. In der Fachposition ist die Ladeeinheit durch die Lastaufnahmemittel aus dem Regalfach aufnehmbar beziehungsweise an dieses abgebbar.

Ein derartiges Regalbediengerät für ein Hochregallager ist beispielsweise aus der Offenlegungsschrift DE 103 23 849 A1 bekannt. Die Lastaufnahmemittel sind dort durch zwei parallele, voneinander beabstandete Gabeln zur Aufnahme einer Palette gebildet. Die Gabeln sind quer zum Regal in Ein- und Auslagerrichtung ausfahrbar. Beim Verfahren des Regalbediengerätes in Gassenlängsrichtung von einer Übernahmeposition am Regalende bis zur Bedienposition vor dem zu bedienenden Regalfach sind die einzulagernden Paletten mit ihrer Längsseite quer zur Bediengasse ausgerichtet, um mit ihrer Breitseite voraus in ein schmal dimensioniertes Regalfach eingelagert werden zu können. Die Gassenbreite der Bediengasse bemisst sich demnach nach der Längsseite der Palette vergrößert um je einen Sicherheitsabstand zu den benachbarten Regalen.

Aufgabe der Erfindung ist es nun, ein Regalbediengerät der eingangs genannten Art bereitzustellen, welches eine Steigerung der Lagerkapazität in einem Hochregallager erlaubt.

Die Aufgabe wird erfindungsgemäß gelöst durch ein gattungsgemäßes Regalbediengerät mit den im kennzeichnenden Teil des Patentanspruches 1 angegebenen Merkmalen. Demnach ist beim Verfahren der Lastaufnahmemittel längs der Bediengasse bis hin zu einer Umsetzposition des zu bedienenden Regalfaches oder weg von dieser die Längsseite der von den Lastaufnahmemitteln aufgenommenen Ladeeinheit in Gassenlängsrichtung ausgerichtet. Des Weiteren ist durch die Lastaufnahmemittel beim Verfahren zwischen Umsetzposition und Bedienposition des zu bedienenden Regalfaches eine überlagerte Dreh- und Verschiebebewegung ausführbar. Aufgrund der Verfahrbarkeit der von den Lastaufnahmemitteln aufgenommenen Ladeeinheit in Gassenlängsrichtung mit Ausrichtung der Längsseite der Ladeeinheit in Gassenlängsrichtung können die Bediengassen des Hochregallagers schmaler ausgeführt werden. Hierdurch kann im gleichen Hochregallager eine größere Anzahl an Hochregalen aufgestellt werden, wodurch sich die Gesamtzahl an für die Einlagerung zur Verfügung stehenden Regalfächer erhöht. Alternativ oder gleichzeitig kann der beiderseits an den Längsseiten der Ladeeinheiten zu den Hochregalen einzuhaltende Sicherheitsabstand vergrößert werden, wodurch die Störanfälligkeit beim Betrieb des Regalbediengerätes durch Touchieren von aus den Regalfächern herausstehenden Ladeeinheiten verringert wird.

In einer vorteilhaften Ausführungsform des erfindungsgemäßen Regalbediengerätes weist der Hubschlitten eine Führungsschiene auf, entlang der ein Führungselement verfahrbar ist, mit dem die Lastaufnahmemittel zur Ausführung der Verschiebebewegung verbunden sind. Dabei trägt das Führungselement einen um eine vertikale Drehachse drehbaren Drehtisch, mit dem die Lastaufnahmemittel zur Ausführung der Drehbewegung verbunden sind. Durch eine mechanische Führungsschiene kann ein Führungselement gleitend auf einer vorbestimmten Bahn geführt werden, um eine Verschiebung der Lastaufnahmemittel in zwei horizontalen Dimensionen auszuführen. Die Verschiebung erfolgt mittels eines gesteuerten Antriebs, dessen Steuerung mit einem Drehantrieb für die Drehbewegung der Lastaufnahmemittel gekoppelt ist. Dreh- und Verschiebebewegung sind derart aufeinander abgestimmt, dass eine kollisionsfreie Überführung der von den Lastaufnahmemitteln aufgenommenen Ladeeinheit zwischen Umsetzposition und Bedienposition gewährleistet ist.

In einer bevorzugten Ausgestaltung des erfindungsgemäßen Regalbediengerätes sind die Lastaufnahmemittel beim Verfahren zwischen der Umsetzposition und der Bedienposition eines zu bedienenden Regalfaches um 90° drehbar und dabei derart verschiebbar, dass die Ladeeinheit wenigstens teilweise vorübergehend in das zu bedienende Regalfach, nicht aber in Regalfächer des benachbarten Hochregals eintaucht. Dass eine Drehung der Lastaufnahmemittel, gegebenenfalls mit Ladeeinheit, um 90° auch in Bediengassen mit einer geringeren Gassenbreite möglich ist, wird der Raum des zu bedienenden Regalfaches wenigstens teilweise als Rangierraum genutzt. In der Umsetzposition befindet sich die Ladeeinheit beispielsweise in der Mitte der Bediengasse zum Teil vor dem zu bedienenden Regalfach und zum Teil vor einem hierzu benachbarten Regalfach. Die vertikale Drehachse kann beispielsweise etwa durch den Schwerpunkt der von den Lastaufnahmemitteln aufgenommenen Ladeeinheit verlaufen. Die vor dem zu bedienenden Regalfach liegende Breitseite der Ladeeinheit wird nun durch Drehung der Lastaufnahmemittel und gleichzeitige Verschiebung der Drehachse in Richtung des zu bedienenden Regalfaches bewegt. Damit aufgrund der Drehung der Ladeeinheit deren gegenüberliegende Breitseite nicht mit dem benachbarten Hochregal kollidiert, wird der Drehpunkt in Richtung des zu bedienenden Regalfaches bewegt, wodurch die Ladeeinheit teilweise in dieses hineinragt. Nach erfolgter Drehung der Ladeeinheit um etwa 45° kann die restliche Drehung um weitere 45° unter Verschiebung der Drehachse in Richtung des dem zu bedienenden Regalfach gegenüber liegenden Regalfaches erfolgen, ohne dass die Ladeeinheit mit dem benachbarten Hochregal kollidiert. Am Ende der überlagerten Dreh- und Verschiebebewegung nehmen die Lastaufnahmemittel die Bedienposition des Regalfaches ein, in der die Längsseite der Ladeeinheit in Gassenquerrichtung ausgerichtet ist und die Drehachse mittig vor dem zu bedienenden Regalfach liegt.

Weitere Eigenschaften und Vorteile ergeben sich aus nachfolgender Beschreibung eines Ausführungsbeispiels anhand der Zeichnungen, in deren
- FIG 1: ein erfindungsgemäßes Regalbediengerät im Hochregallager mit den Lastaufnahmemitteln in einer Übernahmeposition am Ende einer Bediengasse in Draufsicht,
- FIG 2: das Regalbediengerät aus FIG 1 mit den Lastaufnahmemitteln in einer Umsetzposition,
- FIG 3: das Regalbediengerät aus FIG 1 mit den Lastaufnahmemitteln in einer Bedienposition,
- FIG 4: das Regalbediengerät aus FIG 1 mit den Lastaufnahmemitteln in einer Fachposition,
- FIG 5: das Regalbediengerät aus FIG 1 in sequenziellen Momentaufnahmen der Lastaufnahmemittel beim Verfahren von der Umsetzposition in die Bedienposition

### schematisch veranschaulicht sind.

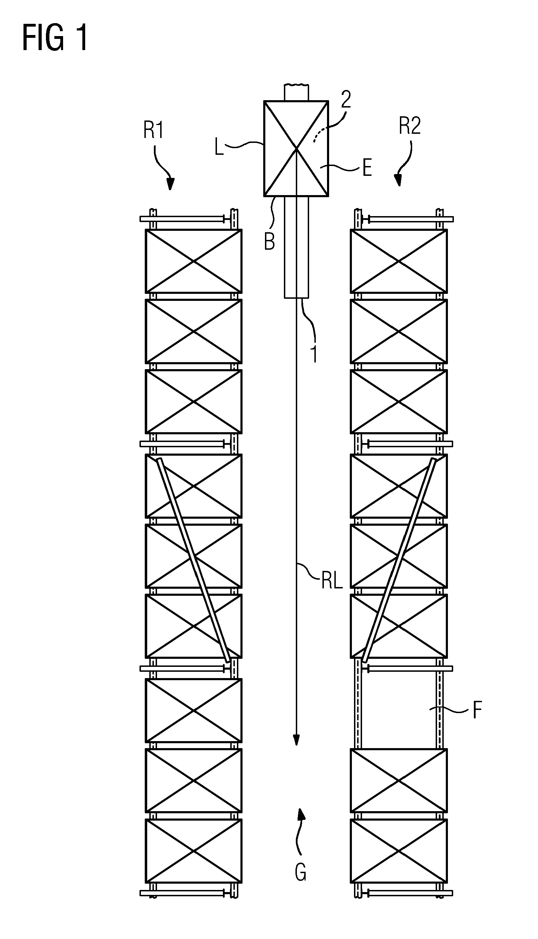

Gemäß FIG 1 bis FIG 5 weist ein Hochregallager mindestens ein Hochregal R1 und ein zu diesem benachbartes Hochregal R2 auf. Die Hochregale R1 und R2 sind parallel zueinander angeordnet und weisen eine Vielzahl an nebeneinander und übereinander angeordneten Regalfächern F für einzulagernde Ladeeinheiten E auf. Die Ladeeinheiten E weisen eine Längsseite L und eine kürzer als diese bemessene Breitseite B auf und können beispielsweise als rechteckige Paletten mit darauf angeordnetem Ladegut ausgebildet sein. Zwischen den Hochregalen R1 und R2 verläuft eine Bediengasse G, in der die Hochregale R1 und R2 mittels eines erfindungsgemäßen Regalbediengerätes bedient werden.

Das Regalbediengerät umfasst ein Fahrwerk, welches mittig in Gassenlängsrichtung RL spurgeführt verfahrbar ist. Hierzu kann das Fahrwerk nicht dargestellte Schienenräder aufweisen, die durch eine Bodenschiene geführt werden. Das Fahrwerk trägt einen Mast oder einen durch zwei Masten gebildeten Rahmen, entlang dessen ein Hubschlitten in vertikale Richtung verfahrbar ist. Fahrwerk, Mast und Hubschlitten sind an sich bekannt und in der Figur als gemeinsame Baueinheit vereinfacht durch ein mit dem Bezugszeichen 1 versehenes Rechteck dargestellt. Der Hubschlitten trägt Lastaufnahmemittel 2 zur Aufnahme und Abgabe der Ladeeinheit E, die beispielsweise als Gabel, Gabelpaar oder Teleskopgabel ausgebildet sein können und in FIG 1 bis FIG 5 durch die aufgenommene Ladeeinheit E verdeckt wird.

In FIG 1 ist das Regalbediengerät an ein Ende der Bediengasse G verfahren, wo sich die Lastaufnahmemittel 2 in einer Übernahmeposition zur Übernahme einer einzulagernden Ladeeinheit E von nicht dargestellten Transportmitteln befindet. Erfindungsgemäß nehmen die Lastaufnahmemittel 2 die Ladeeinheit E derart auf, dass ihre Längsseite L in Gassenlängsrichtung RL ausgerichtet ist. Das Regalbediengerät erhält von einem Lagerverwaltungssystem beispielsweise den Auftrag, die übernommene Ladeeinheit E in das Regalfach F einzulagern. Hierzu verfährt das Regalbediengerät längs der Bediengasse G in Gassenlängsrichtung RL bis die Lastaufnahmemittel 2 in eine Umsetzposition des zu bedienenden Regalfaches F verfahren ist. Bei bekannten Regalbediengeräten wird die Ladeeinheit durch die Lastaufnahmemittel um 90° gedreht, also mit deren Längsseite in Gassenquerrichtung RQ ausgerichtet, verfahren. Hierdurch arbeiten erfindungsgemäße Regalbediengeräte weniger störanfällig, da der Abstand zwischen Ladeeinheit E und den Hochregalen R1 und R2 größer gehalten werden kann. Es kann auch die Gassenbreite der Bediengasse G verringert werden, was Platz für zusätzliche Hochregale schafft und somit die Lagerkapazität des Hochregallagers erhöht. Es können auch beide Effekte kombiniert werden.

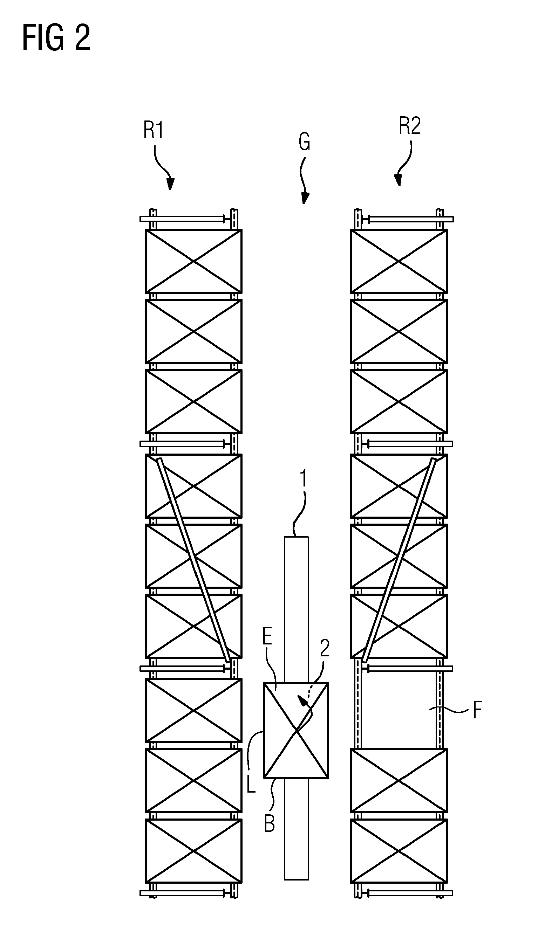

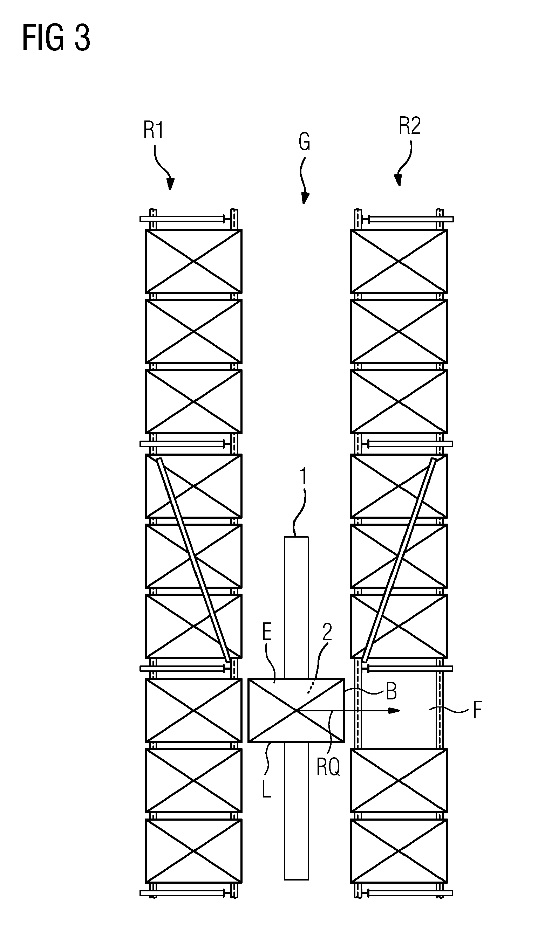

In der Umsetzposition der Lastaufnahmemittel 2 liegt der Mittelpunkt der einzulagernden Ladeeinheit E gemäß FIG 2 - angedeutet durch deren Diagonalenschnittpunkt - mittig in der Bediengasse G ungefähr zwischen dem zu bedienenden Regalfach F und dem hierzu benachbarten Regalfach. Dann werden die Lastaufnahmemittel 2 relativ zum Hubschlitten in einer geführten und überlagerten Dreh- und Verschiebebewegung von der Umsetzposition in eine Bedienposition des zu bedienenden Regalfaches F nach FIG 3 verfahren.

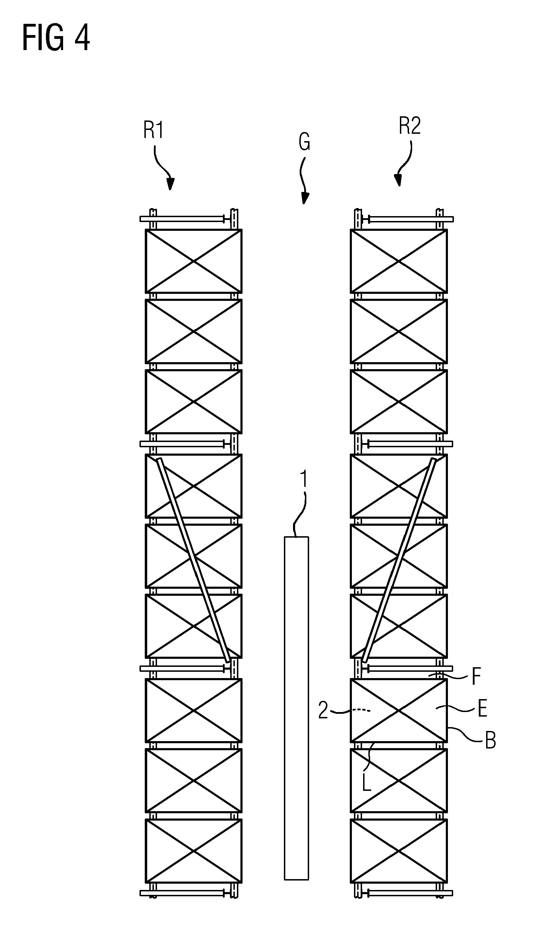

In der Bedienposition des Regalfaches F befinden sich gemäß FIG 3 die Lastaufnahmemittel 2 gegenüber der Umsetzposition derart gedreht und verschoben, dass die Ladeeinheit E mit ihrer Längsseite L nun in Gassenquerrichtung RQ ausgerichtet ist und ihr Mittelpunkt mittig zum zu bedienenden Regalfach F liegt. Von der Bedienposition können die Lastaufnahmemittel 2 in Gassenquerrichtung RQ verfahren werden, bis die Fachposition gemäß FIG 4 erreicht ist. In der Fachposition geben die Lastaufnahmemittel 2 die Ladeeinheit E an das Regalfach F ab. Die Höhe und Breite des Regalfaches F korrespondieren zu den Abmessungen der Höhe und Breitseite B der Ladeeinheit E. Ebenso korrespondiert die Tiefe des Regalfaches F zur Abmessung der Längsseite L der eingelagerten Ladeeinheit E.

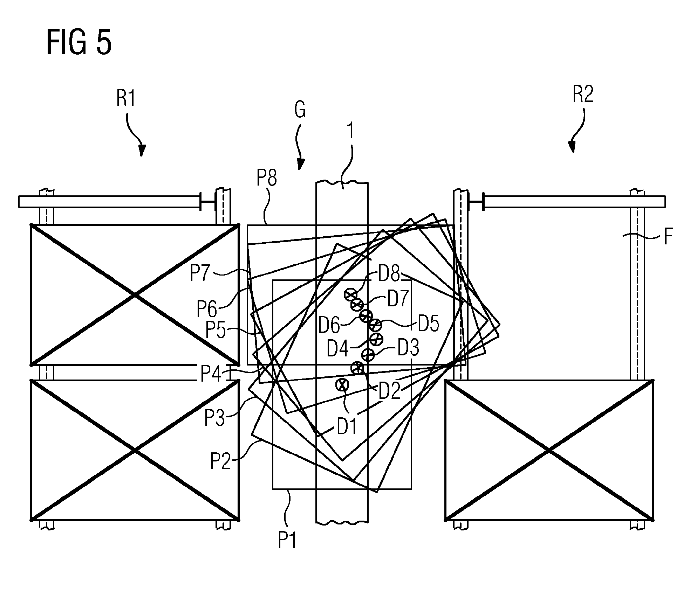

Bei einer gegenüber dem Stand der Technik verengten Bediengasse G, deren Gassenbreite bei einer Palettenabmessung von 1200 mm x 800 mm beispielsweise von 1500 mm auf 1200 mm verringert werden könnte, ist der Verfahrvorgang zwischen Umsetzposition und Bedienposition der Lastaufnahmemittel 2 nicht trivial. Erfindungsgemäß wird dabei die von den Lastaufnahmemitteln 2 aufgenommene Ladeeinheit E wenigstens teilweise und vorrübergehend in das zu bedienenden Regalfach F des Hochregals R2 eintauchen, damit sie nicht mit dem benachbarten Hochregal R1 kollidiert. FIG 5 zeigt die Ladeeinheit E stroboskopisch in acht Momentaufnahmen P1 bis P8, wobei von deren Diagonalen nur die jeweiligen Diagonalenschnittpunkte D1 bis D8 angedeutet sind. Bei Momentaufnahme P1 befindet sich die Ladeeinheit E in Umsetzposition. Bis zur Momentaufnahme P4 ist die Ladeeinheit E um etwa 45° im Uhrzeigersinn gedreht und der Diagonalenschnittpunkt von D1 in Richtung des zu bedienenden Regalfaches F nach D4 verschoben. Die weitere Drehung der Ladeeinheit E auf 90° in Momentaufnahme P8 erfolgt unter Verschiebung des Diagonalenschnittpunktes vom Regalfach F weg nach D8, wo sich die Ladeeinheit E mittig vor dem Regalfach F in Bedienposition befindet.

Die Trajektorie der Diagonalenmittelpunkte D1 bis D8 der Ladeeinheit E kann in Form einer Führungsschiene nachgebildet sein, in der ein Führungselement verfahrbar ist. Das Führungselement kann einen Drehtisch aufweisen, auf dem die Lastaufnahmemittel 2 angeordnet sind und der um eine durch den Diagonalenschnittpunkt D vertikal verlaufende Drehachse drehbar gelagert ist. Die Verschiebe- und Drehbewegung der Lastaufnahmemittel 2 kann durch gesteuerte Antriebe automatisch ausgeführt werden, wenn deren Steuerungen oder deren gemeinsame Steuerung entsprechend aufeinander abgestimmt sind, so dass einer Position eines Diagonalenschnittpunktes D auf der Führungsschiene ein bestimmter Drehwinkel des Drehtisches zugeordnet ist und durch die Antriebe eingestellt wird.

Das Verfahren der Lastaufnahmemittel 2 von der Fachposition in die Bedienposition und weiter zurück in die Umsetzposition erfolgt in genau umgekehrter Reihenfolge. Befindet sich das zu bedienende Regalfach im gegenüber liegenden Regalfach R1, so erfolgt die Verfahrbewegung der Lastaufnahmemittel 2 spiegelverkehrt bezüglich der Längsachse der Bediengasse G.

## Patentansprüche

1. Regalbediengerät für ein Hochregallager mit mindestens zwei benachbarten Hochregalen (R1, R2), welche parallel zueinander angeordnet sind, eine zwischen diesen verlaufende Bediengasse (G) bilden und Regalfächer (F) für einzulagernde Ladeeinheiten (E) aufweisen, umfassend ein in Gassenlängsrichtung (RL) spurgeführt verfahrbares Fahrwerk (1) mit einem Mast, einen in vertikale Richtung entlang des Masts verfahrbaren Hubschlitten und vom Hubschlitten getragene Lastaufnahmemittel (2) zur Aufnahme und Abgabe einer Ladeeinheit (E), welche eine Längsseite (L) und eine kürzer als diese bemessene Breitseite (B) aufweist, insbesondere einer rechteckigen Palette mit darauf angeordnetem Ladegut, wobei die Lastaufnahmemittel (2) zwischen einer Bedienposition (PB) eines zu bedienenden Regalfaches (F), in der die Ladeeinheit (E) in der Bediengasse (G) vor dem Regalfach (F) angeordnet und mit ihrer Längsseite (L) in Gassenquerrichtung (RGQ) ausgerichtet ist, und einer Fachposition (PF) im Regalfach (F), in der die Ladeeinheit (E) durch die Lastaufnahmemittel (2) aus dem Regalfach (F) aufnehmbar beziehungsweise an dieses abgebbar ist, in Gassenquerrichtung (RQ) verfahrbar sind,
**dadurch gekennzeichnet, dass** beim Verfahren der Lastaufnahmemittel (2) längs der Bediengasse (G) bis hin zu einer Umsetzposition (PU) des zu bedienenden Regalfaches (F) oder weg von dieser die Längsseite (L) der von den Lastaufnahmemitteln (2) aufgenommenen Ladeeinheit (E) in Gassenlängsrichtung (RGL) ausgerichtet ist, und dass durch die Lastaufnahmemittel (2) beim Verfahren zwischen Umsetzposition (PU) und Bedienposition (PB) des zu bedienenden Regalfaches (F) eine überlagerte Dreh- und Verschiebebewegung ausführbar ist.

2. Regalbediengerät nach Anspruch 1, wobei der Hubschlitten eine Führungsschiene aufweist, entlang der ein Führungselement, mit dem die Lastaufnahmemittel zur Ausführung der Verschiebebewegung verbunden sind, verfahrbar ist, wobei das Führungselement einen um eine vertikale Drehachse drehbaren Drehtisch trägt, mit dem die Lastaufnahmemittel zur Ausführung der Drehbewegung verbunden sind.

3. Regalbediengerät nach Anspruch 1 oder 2, wobei die Lastaufnahmemittel (2) beim Verfahren zwischen der Umsetzposition (PU) und der Bedienposition (PB) eines zu bedienenden Regalfaches (F) um 90° drehbar und dabei derart verschiebbar sind, dass die Ladeeinheit (E) wenigstens teilweise vorübergehend in das zu bedienende Regalfach (F), nicht aber in Regalfächer (F) des benachbarten Hochregals (R2, R1) eintaucht.
